# EUROPEAN PATENT SPECIFICATION

(11) **EP 3 551 563 B1**
(45) Date of publication and mention of the grant of the patent: **23.09.2020**
(21) Application number: 17808477.8
(22) Date of filing: 04.12.2017
(51) Int. Cl.: B66B 1/46, B66B 1/34

(54) **ELEVATOR INSTALLATION WITH PREDICTIVE CALL BASED ON NOISE ANALYSIS**
AUFZUGSANLAGE MIT PRÄDIKTIVEM ANRUF BASIEREND AUF RAUSCHANALYSE
INSTALLATION D'ASCENSEUR AVEC APPEL PRÉDICTIF SUR LA BASE D'UNE ANALYSE DU BRUIT

(30) Priority: 06.12.2016 EP 16202343
(43) Date of publication of application: 16.10.2019
(73) Proprietor: Inventio AG, 6052 Hergiswil (CH)
(72) Inventor: NOWEL, Edward, Columbia, New Jersey 07832 (US)
(86) International application number: PCT/EP2017/081405
(87) International publication number: WO 2018/104246

(56) References cited:
- US-A1- 2015 075 914
- US-A1- 2015 329 316

## Description

The present disclosure of various embodiments generally relates to control schemes applied in elevator installations. More particularly, the various embodiments described herein relate to scheduling elevator trips.

An elevator installation typically applies one of two distinct control schemes, namely a conventional up/down control system (i.e., a passenger enters a destination floor via a car operating panel (COP) from within an elevator car), or a destination call control system (i.e., a passenger enters a destination floor via a landing operating panel (LOP) while at a boarding floor). In either one of these systems, it is an objective to optimize the transportation efficiency, e.g., to reduce passengers' waiting time. For example, US 2016/0130112 A1 discloses the scheduling of elevator cars using uncertain information about arrival times of future passengers at any floor of a building. The scheduling considers arrival information acquired by sensors (motion detectors, surveillance cameras, or proximity sensors), and the probability of service requests by the future passengers and the probability of possible times of the service. Similarly, a scheduling technology disclosed in WO 2006/113598 uses advanced traffic information to improve performance for passengers. The information is obtained from a destination entry system having a keypad located at a distance from the elevators, sensors in a corridor leading to the landing, video cameras, identification card readers, and computer systems networked to a group elevator control to provide advanced reservations or requests for cars to specific destination floors based upon predicted demand, such as a hotel conference schedule system providing information as to when meetings will start or end and therefore generate a demand for elevator service.

US 2015/329316 A1 discloses an elevator installation wherein the number of passengers waiting in front of an elevator door can be determined by means of a sensor. Once a sensor senses excessive passengers waiting for the elevator at a certain area, a central control system automatically dispatches an elevator to that floor to lessen the waiting time. The sensor can be a sensor sensitive to any sound generated by the passengers waiting in front of the elevator.

These technologies strive to improve the overall scheduling process. Accordingly, the disclosed technologies apply rather complex models and procedures. Not all buildings, however, require elevator installations operating in accordance with such complex scheduling processes. There is, therefore, a need for an alternative technology that is more suitable for such buildings.

Accordingly, one aspect of such a technology involves an elevator installation for a building having a plurality of floors. The elevator installation includes an elevator controller to control an elevator car to move from one floor to another floor, a plurality of sensor units, and a processing unit coupled to the elevator controller and the sensor units. Each sensor unit is located on a floor and configured to generate an electrical signal that is indicative of a noise level in its vicinity on the floor. The processing unit is configured to analyze received electrical signals to determine if an electrical signal indicates an increased noise level on a floor on which the sensor unit generating that electrical signal is located, and to generate a control signal for the elevator controller that is indicative of the floor with the increased noise level. Analyzing an electrical signal includes analyzing a frequency shift caused by the Doppler effect to determine if a source of noise approaches the respective sensor unit, or determining a sequence of sensor units that sequentially detect increased noise levels on a floor to determine a direction of movement of the source of noise. In response to the control signal, the elevator controller is configured to cause the elevator car to move to the floor with the increased noise level.

Another aspect of the technology involves a method of controlling an elevator installation in a building having a plurality of floors. The elevator installation includes an elevator controller that causes an elevator car to move from one floor to another floor, a plurality of sensor units located on the floors, and a processing unit coupled to the elevator controller and the sensor units. According to the method, electrical signals from the sensor units are received by the processing unit, wherein each electrical signal is indicative of a noise level on a floor in a vicinity of the sensor unit that generates the electrical signal. The electrical signals are analyzed by the processing unit to determine if one of the electrical signals is indicative of an increased noise level on the floor on which the sensor unit generating that electrical signal is located. Analyzing an electrical signal includes analyzing a frequency shift caused by the Doppler effect to determine if a source of noise approaches the respective sensor unit, or determining a sequence of sensor units that sequentially detect increased noise levels on a floor to determine a direction of movement of the source of noise. If such an electrical signal is determined, a control signal for the elevator controller is generated by the processing unit that is indicative of the floor with the increased noise level. In response to the control signal, the elevator car is caused by the elevator controller to move to the floor with the increased noise level.

The technology described herein uses sensor units to detect if noise on a floor increases. Noise may increase on a floor, for example, when the door of a meeting or conference room opens and people outpour from the room onto the hallway chatting or making other noises. The technology analyzes the noise to detect that a source of noise moves to distinguish it from a non-moving source of noise that may also be responsible for an increased noise level. A generated electrical signal is analyzed to determine a frequency shift caused by the Doppler effect, or generated electrical signals are analyzed to determine a sequence of sensor units that sequentially detect increased noise levels on a floor to determine a direction of movement of the source of noise. The technology interprets this as a need for elevator service on that floor, and sends one or more elevator cars to that floor in anticipation that a call will be entered on that floor. Hence, when the first people reach the elevator, an elevator car may already be there waiting, be on the way to that floor, or be scheduled to move to that floor. This reduces the waiting time and improves the overall car scheduling of the elevator installation.

In one embodiment, each sensor unit includes an electroacoustic transducer. The electroacoustic transducer converts air pressure changes caused by noise or voices into the electrical signal; it may be a microphone. Such electroacoustic transducers have a relatively small form factor and low complexity, and are readily available, also at low cost.

The improved technology provides flexibility regarding implementation of the sensor units. This allows adapting the technology to particular requirements and circumstances of a particular building. In one embodiment, each sensor unit includes a radio frequency (RF) module for wirelessly transmitting the electrical signal. In another embodiment, the elevator installation includes a communications network having communications lines, and each sensor unit is coupled to the processing unit via at least one of the communications lines.

To receive such wirelessly transmitted electrical signals, the elevator installation includes in one embodiment a plurality of radio frequency (RF) transceivers coupled to the processing unit. Each RF transceiver is configured to receive the electrical signal transmitted by the sensor unit's RF module that is located within radio frequency range. Using wireless transmission technology simplifies installing the sensor units, and, as no wires or cables need to be installed, provides flexibility regarding selecting the locations of the sensor units.

In one embodiment, the RF transceivers may be comprised in floor terminals that further include floor call terminals of the elevator installation. This allows running the cables that may be needed to couple the RF transceivers to the processing unit together, e.g., in the same conduit, with those needed to couple the floor call terminals to the elevator controller. This simplifies the installation, e.g., with respect to time and cost, and may be an advantage if design aspects need to be considered, e.g., one design aspect may require that the RF transceivers are not visible. The possibility of using the same conduit may be beneficial when a building owner decides to upgrade or modernize the building with the technology described herein, e.g., to adapt the elevator installation to changed circumstances (e.g., higher passenger traffic due to, e.g., changed use of the building). During such an upgrade project, cables can be installed in the existing elevator shaft, and the wireless sensor units can be installed at desired locations without having to install cables. The RF transceivers that receive the electrical signals from the sensor units may be installed at convenient locations and coupled, e.g., to the vertically running cables in the elevator shaft.

Further, the technology may be modified by using not only noise analysis, but additionally building related information. In one embodiment, the elevator installation includes a database coupled to the processing unit, and storing data relating to building events. Such events include, for example, dates for conferences, arrivals of groups, or building constructions. The data can be used by the processing unit to refine the scheduling of an elevator car.

With or without the refinement option through using the building event data, the technology provides choices regarding the determination of whether or not noise level increased on a floor. Selecting one of these choices allows choosing between a more or less complex implementation. In one embodiment that allows a less complex implementation, when determining if one of the electrical signals is indicative of an increased noise level, the noise level represented by an electrical signal is compared with a threshold value. If the noise level exceeds the threshold value, this indicates an increased noise level of the respective floor. The threshold value represents in one embodiment a base noise level prevailing on a floor. To adapt for various situations in a building, e.g., during a 24-hour day, the base noise level is a function of time. In another embodiment, the threshold value represents an average noise level caused by talking persons. That noise level may be fixed for each floor, or determined by a measurement on each floor. The measurements take into account acoustic situations on the floor.

In one embodiment, the control signal for the elevator controller is generated when a predetermined period of time expires. This time period delays the generation of the control signal to avoid that a transient or impulse noise triggers the sending of an elevator car to the floor.

The novel features and method steps characteristic of the technology are set out in the claims below. The various embodiments of the technology, however, as well as other features and advantages thereof, are best understood by reference to the detailed description, which follows, when read in conjunction with the accompanying drawings, wherein:
- Fig. 1: shows a schematic illustration of an exemplary building equipped with one embodiment of an elevator installation applying elevator car scheduling based on sound analysis;
- Fig. 2: shows a schematic illustration of an exemplary situation of a floor of the building shown in Fig. 1;
- Fig. 3: shows a schematic illustration of one embodiment of a processing unit performing sound analysis and scheduling processing; and
- Fig. 4: is a flow diagram of one embodiment of a method of operating the elevator installation of Fig. 1.

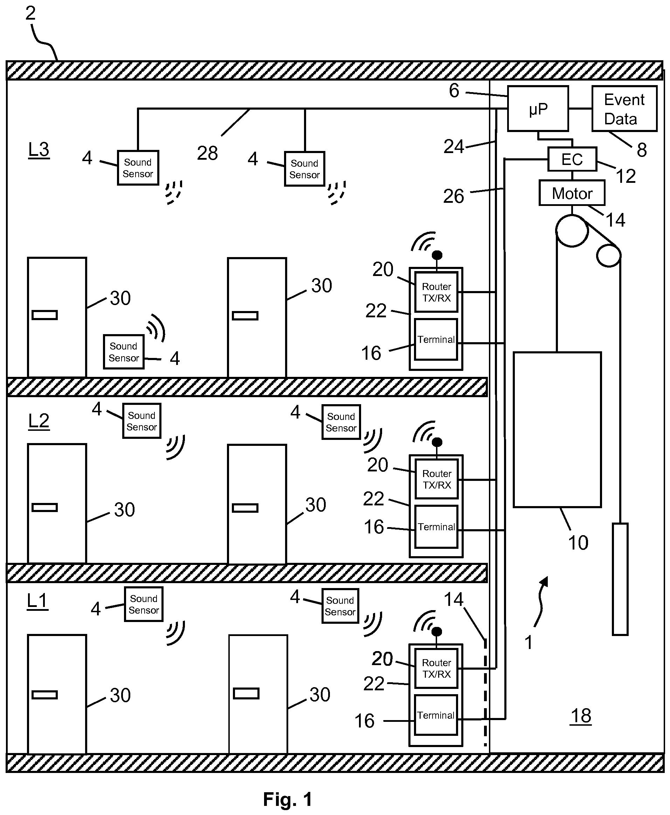

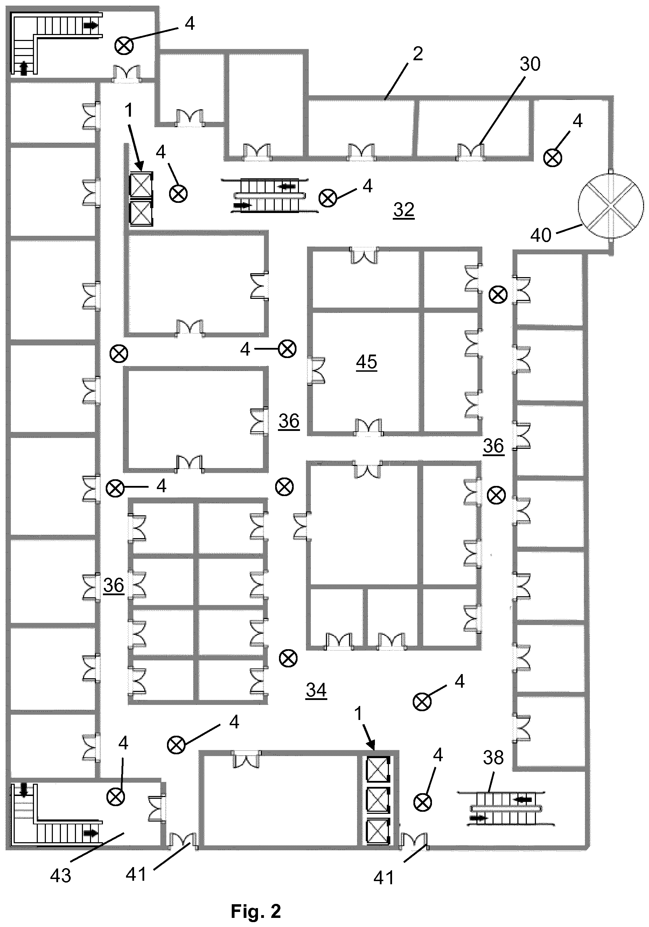

Fig. 1 is a schematic illustration of one embodiment of a building 2 equipped with one embodiment of an elevator installation 1 that applies elevator car scheduling based on sound analysis. The building 2 may be an apartment building, an office building, a commercial/shopping center, a conference center, a hotel, a sports arena, an airport terminal, a ship, or any other structure suitable for a person to reside or stay for a certain period of time. The exemplary building 2 shown in Fig. 1 is used herein to describe various embodiments of the technology; it is contemplated, however, that other structures may have a different layout. The illustrated part of the building 2 has several floors L1, L2, L3, each one providing access to dedicated areas or zones (e.g., offices or apartments) and an elevator car 10 of the elevator installation 1. That is, a passenger can board the elevator car 10 on one of these floors L1, L2, L3 (sometimes referred to as a boarding floor), and, after having been transported to another one of these floors L1, L2, L3 (sometimes referred to as a destination floor), exit the elevator car 10 at the destination floor. On at least one of the floors L1, L2, L3, the passenger may enter an office, an apartment, a restaurant, a conference room, a ball room, or exit the building 2 via a door 30, e.g., an apartment/office door or a building door. It is contemplated that the elevator installation 1 may have more than one elevator car, e.g., in an elevator group, and that the building 2 may have more than one elevator installation 1, as exemplary shown in Fig. 2.

Fig. 1 shows components of the elevator installation 1 to the extent believed to be helpful for a complete understanding of the technology described herein. An elevator controller 12 (EC) is coupled to a drive system 14 (Motor), which is configured to move the elevator car 10 by means of one or more suspension members up and down a shaft 18. As an alternative to such a traction elevator, in another embodiment, the elevator installation 1 may be a hydraulic elevator. The elevator controller 12 includes in one embodiment a call control unit, which processes calls received from floor call terminals 16, a car terminal (not shown), or both. The call processing depends on the implemented control scheme (e.g., a conventional up/down control system or a destination call control system), and includes, for example, determining the floor L1, L2, L3 where the elevator car 10 is needed, determining the destination floor L1, L2, L3, and acknowledging the call. Based on that call processing, the elevator controller 12 controls the drive system 14 to move the elevator car 10 to the boarding floor L1, L2, L3, and then to the destination floor L1, L2, L3. Depending on a particular embodiment, the functionality of the call control unit may be implemented separate from the elevator controller 12, e.g., in a separate control unit coupled to the elevator controller 12.

The elevator installation 1 includes further a plurality of sensor units 4 arranged at predetermined locations, e.g., inside the building 2 and/or within a predetermined area outside the building 2. In one embodiment, the sensor unit 4 includes an electroacoustic transducer that converts air pressure changes caused by noise, sound and/or voices (hereinafter, noise is used to refer to one or more of these causes for air pressure changes) into an electrical signal output from the sensor unit 4. Hereinafter, the electrical signal is referred to as audio signal. The electroacoustic transducer may be referred to herein as acoustic sensor. One example of such a transducer or sensor is a microphone. The audio signal is a function of time and the volume/loudness of the noise, sound, and/or voices.

Depending on a particular configuration of the sensor unit 4, the audio signal output by the sensor unit 4 may be an analog signal or a digital signal (i.e., the sensor unit 4 itself converts electrical signal generated by the electroacoustic transducer into a digital signal). Hereinafter, the audio signal is a digital signal, its particular format depending on which digital signal formatting is used. For example, the digital signal may be a pulse train (e.g., a pulse amplitude modulated signal) that is a sequence of fixed-width square-wave electrical pulses, each occupying a discrete number of levels of amplitude, wherein, e.g., a binary signal varies between a low and a high signal level. The digital signal may be a representation of an electrical signal that is sampled and quantified; resulting quantities are represented as a sequence of codes, and, e.g., transmitted as a pulse code modulation (PCM) signal.

It is contemplated that the sensor units 4 can have different configurations regarding their operation. For example, the sensor units 4 may be always on once installed and powered; or they may be activated and deactivated as needed. For instance, in one embodiment, the sensor units 4 may be selectively activated and deactivated, e.g., floor-by-floor. In one embodiment, the sensor units 4 are activated when the elevator installation 1 is in operation (as opposed to being out of service during maintenance). An always on, or activated sensor unit 4 constantly detects the noise level in its vicinity, and, accordingly, generates a continuous audio signal that changes over time depending on the noise level.

The sensor units 4 are coupled to a processing unit 6 (µP), which is coupled to the elevator controller 12 and a building event database 8. The processing unit 6 may be integrated into the elevator controller 12, or arranged at a central location within the building 2, e.g., as a stand-alone device, or in connection with a building management system. By coupling the sensor units 4 to the processing unit 6, generated audio signals are communicated to the processing unit 6 for further processing and analysis. The coupling may be achieved according to one or more technologies. For illustrative purposes, some of these technologies (wired and wireless) are illustrated in Fig. 1. It is contemplated, however, that in certain embodiments only one of these technologies is used.

In one embodiment, a communications network having communications lines 28 couple each sensor unit 4 to the processing unit 6, as indicated by two sensor units 4 on floor L3. The illustrated communications line 28 may be based on individual wires (or cables) that establish point-to-point connections between the sensor units 4 and the processing unit 6, or a communications bus structure, wherein the sensor units 4 and the processing unit 6 are coupled to the communications bus. In the alternative, as also shown in the embodiment of Fig. 1, the sensor units 4 are configured for wireless communications with the processing unit 6. Each sensor unit 4 includes a radio frequency (RF) module that transmits RF signals according to a certain RF communications technology, such as WiFi/WLAN. To receive these RF signals, Fig. 1 shows RF transceivers 20 (Router TX/RX) installed on each floor L1, L2, L3 and coupled to the processing unit 6 via a communications line 24. The communications line 24 may be based on individual wires (or cables) that establish point-to-point connections between the RF transceivers 20 and the processing unit 6, or a communications bus structure, wherein the RF transceivers 20 and the alarm processing unit 6 are coupled to the communications bus. The RF transceivers 20 may be identified by the processing unit 6 through its address if a bus structure is used, or through a port at which the RF transceiver 20 is connected to the processing unit 6.

Although Fig. 1 shows one RF transceiver 20 for each floor L1, L2, L3, it is contemplated that two or more RF transceivers 20 may be installed on a floor L1, L2, L3. The number of RF transceivers 20 may depend on parameters such as the layout or size of the floor L1, L2, L3, the maximum distance between the RF transceiver 20 and the sensor units 4, and the used RF technology. In consideration of one or more of these parameters, each location for the RF transceiver 20 is selected to be within radio frequency range of a respective sensor unit 4 so that reliable RF communications is ensured.

In the embodiment shown in Fig. 1, the RF transceiver 20 is part of a floor terminal 22 that also houses the floor call terminal 16 of the elevator installation 1. Alternatively, each RF transceiver 20 may be a stand-alone device mounted at a location on the floor L1, L2, L3 independent of the floor call terminal 16. In each floor terminal 22 of the illustrated embodiment, the floor call terminal 16 is coupled via an elevator control network 26 to the elevator controller 12, and the RF transceiver 20 is coupled to the processing unit 6 via a communications line 24. The floor terminal 22 may have a column-like structure for mounting on the floor at a convenient location for elevator passengers. Alternatively, the floor terminal 22 may be mounted to a building wall, or integrated into an elevator door frame. Regardless of the particular arrangement of the floor terminal 22, at least parts of the elevator control network 26 and the communications line 24 extend in one embodiment in vertical direction within the elevator shaft 18. Since the elevator shaft 18 is used as a vertical conduit, installation of the technology described herein, e.g., when it is installed after the building 2 has been erected, is facilitated.

It is contemplated that the processing unit 6 recognizes the sensor unit 4 that generates an audio signal. In one embodiment, each sensor unit 4 stores a sensor identifier, and the processing unit 6 maintains a database storing for each sensor unit 4 a data set. Each data set stores the sensor unit's identifier together with information about where it is located within the building 2. For example, if the sensor unit 4 generates an audio signal, it transmits the sensor identifier together with the audio signal to the RF transceiver 20. In one embodiment, the RF transceiver 20 forwards the audio signal and the sensor identifier to the processing unit 6. The processing unit 6 may then identify the sensor unit 4 and/or its location, and the RF transceiver 20.

Fig. 2 shows a schematic illustration of an exemplary situation of a floor of the building 2 shown in Fig. 1. On that floor, the building 2 has a main entrance 40 and two side entrances 41 through which persons can enter and leave the building 2. Depending on a particular embodiment, the building 2 may have more or less entrances 40, 41. The main entrance 40 leads to a lobby 32, and the side entrances 41 lead to a lobby 34. Each lobby 32, 34 allows a person to access an elevator installation 1, an escalator installation 38, and a stairwell 43 to reach another floor of the building 2. Further, each lobby 32, 34 allows the person to walk into corridors and hallways 36 and individual rooms 45. Similar situations may exist on other floors as well. In the illustrated embodiment, the sensor units 4 are installed at various locations on the floor, e.g., in the hallways 36, at or near a door 30 or an entrance 40, 41, at or near an elevator installation 1, or in or near a staircase 43. The number of installed sensor units 4 and selecting the locations depends, e.g., on the size of the building 2, the use of the floor (e.g., as a ball room floor, a conference floor, or a restaurant floor).

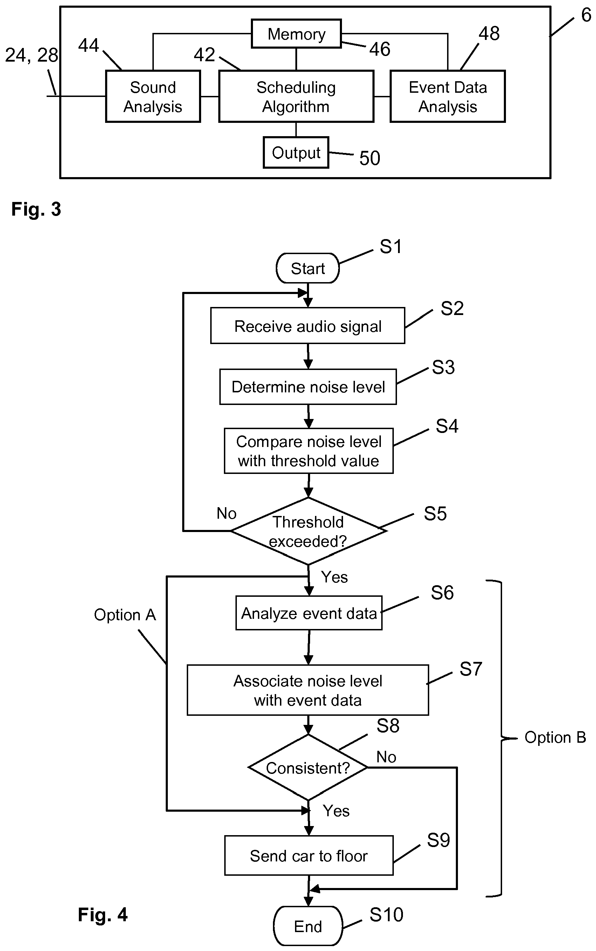

Fig. 3 shows a schematic illustration of the processing unit 6 of Fig. 1 to describe some of its functions. In the illustrated embodiment, the processing unit 6 includes a scheduling processor 42, a sound processor 44, a data processor 48, a memory device 46, and an output 50. The scheduling processor 42 is coupled to the sound processor 44, the data processor 48, the output 50, and the memory device 46, which is further coupled to the sound processor 44 and the data processor 48. The skilled person understands that the processing unit 6 is configured to receive via the communications lines 24, 28 as many (contemporaneous) audio signals as there are sensor units 4 in the building 2. It is contemplated that in one embodiment the analysis of the building event data, which is optional, may be omitted. Further, it is contemplated that Fig. 3 depicts the sound processor 44, the data processor 48, the memory device 46, and the scheduling processor 42 for illustrative purposes by means of functional blocks. In certain specific implementations, one or more functions represented by these functional blocks may be omitted and/or merged with another function. Also, in one embodiment, the processing unit 6 is a computer system that incorporates the sound processor 44, the data processor 48, the memory device 46, and the scheduling processor 42, or their functions.

The memory device 46 includes a readable storage media, which can comprise, for example, one or more of optical disks, volatile memory components (such as DRAM or SRAM), or nonvolatile memory components (such as hard drives, Flash RAM or ROM). In one embodiment, the memory device 46 maintains a database that stores for each sensor unit 4 installed in the building 2 a data set. Each data set includes the sensor unit's identifier together with information about where it is located within the building 2. The information of these data sets may be combined with information about the structural layout of the building 2, and represented, e.g., in a building plan and/or individual floor plans. The memory device 46 can be accessed at least by the scheduling processor 42 and the sound processor 44.

The sound processor 44 processes and analyzes in one embodiment each received audio signal. For example, the sound processor 44 analyzes the audio signal to determine the signal's noise-level information as a function of time, i.e., the sound processor 44 determines the volume of the noise in the sensor unit's vicinity, and detects, for example, if and when the volume increases. The sound processor 44 may further analyze the audio signal to determine an average noise level (e.g., a noise base level) over a predetermined period of time. For example, the sound processor 44 determines how loud it is on a floor L1, L2, L2 on average. The average noise level represents a threshold value used to determine an increased noise level. Contributing to the average noise are, e.g., background noise caused by machines (e.g., air conditioning equipment, cleaning machines, a vending machine), street traffic (e.g., noise entering through windows or doors), or construction taking place in the building 2. That background noise may vary during the course of a day, e.g., it may become lower during nighttime, higher during (street) traffic and office rush hours, and be somewhere in between during other times of the day. In one embodiment, the sound processor 44 uses a stored threshold value that represents an average noise level of talking persons. The threshold may be fixed for all floors L1, L2, L3, or determined by measurements on each floor L1, L2, L3. For each audio signal, the audio signal itself and/or the result of the processing and analysis may be stored in the storage device 46, and/or buffered for access by the sound processor 44.

In one embodiment of the processing unit 6, a machine learning algorithm is implemented that detects acoustic events. The machine learning algorithm may be executed by the sound processor 44, the scheduling processors 42, or a combination thereof. The implemented machine learning algorithm may be based on algorithms described in, for example, Shannon McKenna and David McLaren, "Acoustic Event Detection Using Machine Learning: Identifying Train Events" (printed on November 23, 2016 from: http://cs229.stanford.edu/proj2012/McKennaMcLaren-AcousticEventDetectionUsingMachineLearningIdentifyingTrainEvents.pdf), or Andrey Temko, et al., "CLEAR Evaluation of Acoustic Event Detection and Classification Systems", published in R. Stiefelhagen and J. Garofolo (Eds.): CLEAR 2006, LNCS 4122, pp. 311 - 322, Springer-Verlag, 2007. The machine learning algorithm of the processing unit 6 uses the received audio signals to determine for at least one of the floors L1, L2, L3 a noise pattern over a set period of time, e.g., a day, a week, a month, or a year. Such a noise pattern may be determined for each floor L1, L2, L3.

The processing unit 6 analyzes a noise pattern to learn when periods of a noise base level occur, and when periods of noise above the noise base level occur, if any. The learning may be assisted by event data obtained from the building event database 8. For example, in an office environment, the processing unit 6 may learn that every day between 18:00 and 19:00 the noise level increases by about 3 decibel (dB) above the noise base level due to cleaning, and between 11:30 and 13:00 by about 2 dB due to people collecting for lunch. The increased noise level during lunch time justifies sending an elevator car 10 to the concerned floor L1, L2, L3, whereas that during 18:00 and 19:00 would not. It is contemplated that the processing unit 6 in one embodiment continuously updates the one or more noise patterns. It, therefore, learns of and adapts to changes occurring in the building 2 over time.

As mentioned above, the processing unit 6 uses a threshold value to determine whether or not a current noise level is considered as an increased noise level. In one embodiment, more than one threshold values may be defined, for example, a first and a second threshold value. The second threshold value refers to a higher noise level than the first threshold value. For instance, the first threshold value may refer to the average noise caused by a first group of people, and the second threshold value to the average noise of a second group of people, whereas the second group includes more people. The processing unit 6, e.g., its scheduling processor 42, may be configured to send one elevator car 10 to the concerned floor L1, L2, L3 if the current noise level exceeds the first, but not the second threshold value, and, assuming the elevator installation 1 includes an elevator group, to send two elevator cars 10 if the current noise level exceeds the second threshold value.

Depending on a particular implementation of the processing unit 6, the sound processor 44 may subject the audio signal to a (digital) filtering process and/or a frequency analysis to determine the frequency spectrum of the audio signal. The frequency spectrum allows obtaining information as to the source, or sources, of the noise. That is, signal components distributed mainly in a frequency range of about 300 Hz to about 3000 Hz indicate the presence of voice, whereas noise caused by machines, e.g., during construction work, or street traffic is responsible for signal components distributed over a broader frequency range, including lower and/or higher frequencies. Analyzing the frequency spectrum, hence, facilitates distinguishing (or isolating) noise caused by voices from other noise and detecting a change (e.g., an increase) of the noise caused by voices. In one embodiment, the noise caused by sources other than voice may be disregarded.

Referring to the embodiment shown in Fig. 2 where multiple sensor units 4 are arranged on a floor L1, L2, L3. In that embodiment, the sound processor 44 receives multiple audio signals, and isolating noise caused by voice may be assisted by further analysis of the audio signals. In one embodiment, the sound processor 44 analyzes the audio signals to determine if the source of noise is approaching to distinguish it from noise which does not "move," such as background noise or impulse noise from construction, street traffic and/or machines. Assuming, for example, a group of people leaves a conference room (individual room 45 in Fig. 2), one or more sensor units 4 in the vicinity detect an increased noise level. For one or more of the audio signals, the sound processor 44 may, for example, analyze a frequency shift caused by the Doppler effect to detect if the noise is approaching the respective sensor unit 4 from a certain direction. For example, a sensor unit 4 may detect an approaching noise (frequency shift to higher frequencies), while a neighboring sensor unit 4 may detect noise that moves away (frequency shift to lower frequencies).

In the situation of Fig. 2, the sound processor 44 may in one embodiment analyze the audio signals to determine how the noise caused by the group of people propagates on the floor. For example, the sound processor 44 may identify the sensor unit 4 that detected the increased noise level first, the sensor unit 4 that detected the increased noise level next, and so on. In Fig. 2, for example, if the group leaves the conference room (45), the sensor unit 4 right in front of the conference room would detect the noise first, subsequently those that are arranged in the hallway leading to the lobby 34, and finally the sensor unit 4 in front to the elevator installation 1 that is next to the entrance 41. In this manner, the sound processor 44 may track the noise on the floor.

The data processor 48 is coupled to the building event database 8 (Fig. 1) and configured to analyze stored data regarding events scheduled to take place in the building 2, as s. Such events include, for example, dates for conferences, meetings, arrivals of groups (e.g., tourists in the case of a hotel), and/or other activities (e.g., building constructions, routine cleaning, routine restaurant operation) together with starting and end times, and floor/room information. For example, for a conference, the data includes the time it begins and when it ends, the floor, and the room number, or for the arrival of a tourist group, the data includes the expected arrival time at the hotel's lobby or reception. Using a computer user interface, for example, a building manager may enter such building event data and store it in the building event database 8storage device 46. The data processor 48 analyzes the building event data, e.g., continuously, and signals when and where increased noise is to be expected.

The scheduling processor 42 executes a scheduling algorithm for the elevator car 10. The scheduling algorithm uses the audio signals themselves, the results of their processing, or both as input information. For example, the scheduling algorithm monitors the results of the audio signal processing and reacts upon a result that indicates an increased noise level on a floor L1, L2, L3. As a reaction, the scheduling algorithm generates a control signal that is fed to the elevator controller 12. The control signal identifies the floor L1, L2, L3 where the increased noise level exists, so that the elevator controller 12 may send the elevator car 10 to the floor L1, L2, L3.

In one embodiment, the scheduling processor 42 delays generating the control signal for the elevator for a predetermined period of time. The period of time is selected to avoid that a transient or impulse noise triggers the sending of an elevator car 10 to the floor L1, L2, L3. Transient or impulse noise may be caused, for example, by construction work. The period of time signifies that any increased noise level must last for a certain time before an elevator car 10 is called to a floor L1, L2, L3. For example, the period of time is in the range of a few seconds.

Optionally, the scheduling algorithm may use the building event data as additional input information. If it is available, the building event data may indicate that a conference is taking place, or that construction is going on in the building 2. The scheduling algorithm associates any increased noise level on a floor L1, L2, L3 with the building event data to verify if the occurrence of increased noise is consistent with the building event data. For example, if an increased noise level is detected on a floor L1, L2, L3 while the building event data indicates that a conference room is occupied on that floor L1, L2, L3, the noise level is consistent with the event data, and sending an elevator car 10 to the floor L1, L2, L3 is justified. However, if an increased noise level is detected on a floor L1, L2, L3 while no conference room is occupied on that floor L1, L2, L3, the noise level is not consistent with the event data, and no elevator car 10 would be called.

With the understanding of the general structure and function of the elevator installation 1 and certain features of its components described with reference to Fig. 1, Fig. 2 and Fig. 3, a description of how one embodiment of the elevator installation 1 operates follows with reference to Fig. 4. Fig. 4 shows a flow diagram of one embodiment of a method of controlling the elevator installation 1. It is contemplated that in another illustration of the flow diagram some of the shown steps may be merged into a single step, or split into several separate steps. The flow diagram starts at a step S1 and ends at a step S10.

In a step S2, at least one audio signal generated by a sensor unit 4 is received by the processing unit 6. In an embodiment according to Fig. 1 or Fig. 2, the processing unit 6 receives several audio signals, one from each sensor unit 4. Each audio signal may vary over time depending on the noise level on a floor L1, L2, L3.

Proceeding to a step S3, the noise level of each audio signal is determined. The determination is made by the processing unit 6, e.g., its sound processor 44. For example, the processing unit 6 extracts volume information from the audio signal, and identifies the sensor unit 4 that generated the audio signal. The identity of the sensor unit 4 may be extracted from the audio signal. The processing unit 6 stores the obtained volume and identity information, e.g., in the storage device 46.

Proceeding to a step S4, the noise level is compared with a threshold value. The threshold value is determined, as described above, and stored in the processing unit 6, e.g., in the storage device 46. The processing unit 6 uses the obtained volume information to compare it with the threshold value. If the processing unit 6 determines in a step S5 that the threshold value is exceeded, the method proceeds along the Yes branch, either to a step S9 (according to an option A), or to a step S6 (according to an option B). If the threshold value is not exceeded, the method returns to the step S2.

If the method proceeds according to option A to the step S9, the processing unit 6 generates a control signal for the elevator controller 12. The control signal includes an indication of the floor L1, L2, L3 where the increased noise level was detected, i.e., where elevator service is likely to be required. In response to the control signal, the elevator controller 12 causes an elevator car 10, for example, to move to the concerned floor L1, L2, L3. At that time, and depending on a current situation of the elevator installation 1, the elevator controller 12 may prevent an elevator car 10 that is already on the concerned floor L1, L2, L3 from leaving, send an elevator car 10 that is waiting on another floor L1, L2, L3 to the concerned floor L1, L2, L3, or schedule (or reserve) an elevator car 10, which is currently servicing a call and transporting passengers, to move to the concerned floor L1, L2, L3 once the current service has been completed.

Once the elevator controller 12 processed the control signal, the method ends in the step S10. It is contemplated that the elevator controller 12 may then receive a call entered at the concerned floor L1, L2, L3. Such a call may be entered using the floor call terminal 16 (e.g., the call may be a destination call), or using a COP inside the elevator car 10.

If the method proceeds according to option B to the step S6, building event data is analyzed. In that embodiment, the processing unit 6 obtains building event data from the building event database 8, and determines if, for a time window around the time of the increased noise level, a building event is recorded. For example, the building event data may include time and location information for each event, or indicate that none is recorded for the concerned time window.

Proceeding to a step S7, the noise level is associated with the building event data. The processing unit 6 determines, in a step S8, if the occurrence of the increased noise level is consistent with the building event data, as described above. If the occurrence is not consistent, the method proceeds along the No branch to the step S10 and ends there. However, if the occurrence is consistent, the method proceeds along the Yes branch to the step S9. In the step S9, the processing unit 6 generates a control signal for the elevator controller 12, and causes an elevator car 10 to move to the concerned floor L1, L2, L3, as described above.

## Claims

1. An elevator installation (1) for a building (2), comprising:
an elevator controller (12) to control an elevator car (10) to move from one floor to another floor (L1, L2, L3) of the building (2);
a plurality of sensor units (4), each sensor unit (4) located on a floor (L1, L2, L3) and configured to generate an electrical signal that is indicative of a noise level in its vicinity on the floor (L1, L2, L3); and
a processing unit (6) coupled to the elevator controller (12) and the sensor units (4),
wherein the processing unit (6) is configured to analyze received electrical signals to determine if an electrical signal indicates an increased noise level on a floor (L1, L2, L3) on which the sensor unit (4) generating that electrical signal is located, and to generate a control signal for the elevator controller (12) that is indicative of the floor (L1, L2, L3) with the increased noise level, and
wherein the elevator controller (12) in response to the control signal causes the elevator car (10) to move to the floor (L1, L2, L3) with the increased noise level, **characterized in that** analyzing an electrical signal includes:
- analyzing a frequency shift caused by the Doppler effect to determine if a source of noise approaches the respective sensor unit (4), or
- determining a sequence of sensor units (4) that sequentially detect increased noise levels on a floor (L1, L2, L3) to determine a direction of movement of the source of noise.

2. The installation (1) of Claim 1, wherein each sensor unit (4) includes an electroacoustic transducer, wherein the electroacoustic transducer converts air pressure changes caused by noise or voices into the electrical signal.

3. The installation (1) of any preceding claim, wherein each sensor unit (4) includes a radio frequency module for transmitting the electrical signal.

4. The installation (1) of Claim 3, further comprising a plurality of radio frequency transceivers (20) coupled to the processing unit (6), wherein each radio frequency transceiver is configured to receive the electrical signal transmitted by the sensor unit's radio frequency transmitter that is located within radio frequency range.

5. The installation (1) of any one of Claims 1-2, further comprising a communications network comprising communications lines (28), wherein each sensor unit (4) is coupled to the processing unit (6) via at least one of the communications lines (28).

6. The installation (1) of any preceding claim, further comprising a database (8) coupled to the processing unit (6), wherein the database (8) stores data relating to building events.

7. The installation (1) of any preceding claim, wherein the processing unit (6) includes a scheduling processor (42), a sound processor (44), a data processor (48), and a memory device (46), wherein the scheduling processor (42) is coupled to the sound processor (44), the data processor (48), and the memory device (46), which is further coupled to the sound processor (44) and the data processor (48).

8. The installation (1) of any preceding claim, wherein the processing unit (6) is configured to execute a machine learning algorithm to analyze the electrical signals to determine for at least one of the floors L1, L2, L3 a noise pattern over a set period of time.

9. A method of controlling an elevator installation (1) in a building having a plurality of floors (L1, L2, L3), wherein the elevator installation (1) includes an elevator controller (12) that causes an elevator car (10) to move from one floor (L1, L2, L3) to another floor (L1, L2, L3), a plurality of sensor units (4) located on the floors (L1, L2, L3), and a processing unit (6) coupled to the elevator controller (12) and the sensor units (4), the method comprising:
receiving, by the processing unit (6), electrical signals from the sensor units (4), wherein each electrical signal is indicative of a noise level on a floor (L1, L2, L3) in a vicinity of the sensor unit (4) that generates the electrical signal;
analyzing, by the processing unit (6), the electrical signals to determine if one of the electrical signals is indicative of an increased noise level on the floor (L1, L2, L3) on which the sensor unit (4) generating that electrical signal is located, and, if such an electrical signal is determined, generating a control signal for the elevator controller (12) that is indicative of the floor (L1, L2, L3) with the increased noise level, and
causing, by the elevator controller (12), the elevator car (10) to move to the floor (L1, L2, L3) with the increased noise level in response to the control signal, **characterized in that** analyzing an electrical signal includes:
- analyzing a frequency shift caused by the Doppler effect to determine if a source of noise approaches the respective sensor unit (4), or
- determining a sequence of sensor units (4) that sequentially detect increased noise levels on a floor (L1, L2, L3) to determine a direction of movement of the source of noise.

10. The method of Claim 9, wherein determining if one of the electrical signals is indicative of an increased noise level includes for each electrical signal comparing the noise level represented by the electrical signal with a threshold value, wherein exceeding the threshold value indicates an increased noise level of the respective floor (L1, L2, L3).

11. The method of Claim 10, wherein the threshold value represents a base noise level prevalent on a floor (L1, L2, L3).

12. The method of Claim 11, wherein the base noise level is a function of time.

13. The method of Claim 10, wherein the threshold value represents an average noise level caused by talking persons.

14. The method of any one of Claims 10-13, wherein determining if one of the electrical signals is indicative of an increased noise level includes for each electrical signal comparing the noise level represented by the electrical signal with a further threshold value, wherein the further threshold value is higher than the threshold value, wherein the elevator installation (1) includes more than one elevator car (10), wherein exceeding the further threshold value indicates an increased noise level of the respective floor (L1, L2, L3), and wherein in response to an exceeded further threshold value two elevator cars (10) are caused to move to the floor (L1, L2, L3) with the increased noise level.

15. The method of any one of Claims 9-14, wherein the control signal for the elevator controller (12) is generated when a predetermined period of time expires.

16. The method of any one of Claims 9-15, wherein analyzing the electrical signals includes executing a machine learning algorithm to analyze the electrical signals to determine for at least one of the floors L1, L2, L3 a noise pattern over a set period of time.

## Patentansprüche

1. Aufzugsanlage (1) für ein Gebäude (2), umfassend:
eine Aufzugssteuerung (12), um eine Aufzugskabine (10) zu steuern, um sich von einer Etage in eine andere Etage (L1, L2, L3) des Gebäudes (2) zu bewegen;
mehrere Sensoreinheiten (4), wobei sich jede Sensoreinheit (4) auf einer Etage (L1, L2, L3) befindet und konfiguriert ist, um ein elektrisches Signal zu erzeugen, das einen Geräuschpegel in seiner Nähe auf der Etage (L1, L2, L3) angibt; und
eine Verarbeitungseinheit (6), die mit der Aufzugssteuerung (12) und den Sensoreinheiten (4) gekoppelt ist,
wobei die Verarbeitungseinheit (6) konfiguriert ist, um empfangene elektrische Signale zu analysieren, um zu bestimmen, ob ein elektrisches Signal einen erhöhten Geräuschpegel auf einer Etage (L1, L2, L3) angibt, auf dem sich die Sensoreinheit (4) befindet, die dieses elektrische Signal erzeugt, und um ein Steuersignal für die Aufzugssteuerung (12) zu erzeugen, das die Etage (L1, L2, L3) mit dem erhöhten Geräuschpegel angibt, und
wobei die Aufzugsteuerung (12) als Reaktion auf das Steuersignal veranlasst, dass sich die Aufzugskabine (10) zu der Etage (L1, L2, L3) mit dem erhöhten Geräuschpegel bewegt, **dadurch gekennzeichnet, dass** ein Analysieren eines elektrischen Signals Folgendes beinhaltet:
- Analysieren einer Frequenzverschiebung, die durch den DopplerEffekt veranlasst wird, um zu bestimmen, ob sich eine Geräuschquelle der jeweiligen Sensoreinheit (4) nähert, oder
- Bestimmen einer Folge von Sensoreinheiten (4), die nacheinander erhöhte Geräuschpegel auf einer Etage (L1, L2, L3) erfassen, um eine Bewegungsrichtung der Geräuschquelle zu bestimmen.

2. Anlage (1) nach Anspruch 1, wobei jede Sensoreinheit (4) einen elektroakustischen Transducer beinhaltet, wobei der elektroakustische Transducer Luftdruckänderungen, die durch Geräusche oder Stimmen veranlasst werden, in das elektrische Signal umwandelt.

3. Anlage (1) nach einem der vorhergehenden Ansprüche, wobei jede Sensoreinheit (4) ein Hochfrequenzmodul zum Übertragen des elektrischen Signals beinhaltet.

4. Anlage (1) nach Anspruch 3, ferner umfassend mehrere Hochfrequenzsendeempfänger (20), die mit der Verarbeitungseinheit (6) gekoppelt sind, wobei jeder Hochfrequenzsendeempfänger konfiguriert ist, um das elektrische Signal zu empfangen, das von dem Hochfrequenzsender der Sensoreinheit übertragen wird, der sich innerhalb des Hochfrequenzbereichs befindet.

5. Anlage (1) nach einem der Ansprüche 1-2, ferner umfassend ein Kommunikationsnetzwerk, das Kommunikationsleitungen (28) umfasst, wobei jede Sensoreinheit (4) mit der Verarbeitungseinheit (6) über wenigstens eine der Kommunikationsleitungen (28) gekoppelt ist.

6. Anlage (1) nach einem der vorhergehenden Ansprüche, ferner umfassend eine Datenbank (8), die mit der Verarbeitungseinheit (6) gekoppelt ist, wobei die Datenbank (8) Daten speichert, die sich auf Gebäudeereignisse beziehen.

7. Anlage (1) nach einem der vorhergehenden Ansprüche, wobei die Verarbeitungseinheit (6) einen Planungsprozessor (42), einen Tonprozessor (44), einen Datenprozessor (48) und eine Speichervorrichtung (46) beinhaltet, wobei der Planungsprozessor (42) mit dem Tonprozessor (44), dem Datenprozessor (48) und der Speichervorrichtung (46) gekoppelt ist, die ferner mit dem Tonprozessor (44) und dem Datenprozessor (48) gekoppelt ist.

8. Anlage (1) nach einem der vorhergehenden Ansprüche, wobei die Verarbeitungseinheit (6) konfiguriert ist, um einen maschinellen Lernalgorithmus auszuführen, um die elektrischen Signale zu analysieren, um für die Etagen L1, L2, und/oder L3 ein Geräuschmuster über einen festgelegten Zeitraum zu bestimmen.

9. Verfahren zum Steuern einer Aufzugsanlage (1) in einem Gebäude, die mehrere Etagen (L1, L2, L3) aufweist, wobei die Aufzugsanlage (1) eine Aufzugssteuerung (12), die eine Aufzugskabine (10) veranlasst, sich von einer Etage (L1, L2, L3) zu einer anderen Etage (L1, L2, L3) zu bewegen, mehrere Sensoreinheiten (4), die sich auf den Etagen (L1, L2, L3) befinden, und eine Verarbeitungseinheit (6) beinhaltet, die mit der Aufzugssteuerung (12) und den Sensoreinheiten (4) gekoppelt ist, wobei das Verfahren Folgendes umfasst:
Empfangen, durch die Verarbeitungseinheit (6), von elektrischen Signalen von den Sensoreinheiten (4), wobei jedes elektrische Signal einen Geräuschpegel auf einer Etage (L1, L2, L3) in der Nähe der Sensoreinheit (4) angibt, die das elektrische Signal erzeugt;
Analysieren, durch die Verarbeitungseinheit (6), der elektrischen Signale, um zu bestimmen, ob eines der elektrischen Signale einen erhöhten Geräuschpegel auf der Etage (L1, L2, L3) angibt, auf der sich die Sensoreinheit (4) befindet, die das elektrische Signal erzeugt, und, wenn ein derartiges elektrisches Signal bestimmt wird, ein Steuersignal für die Aufzugssteuerung (12) erzeugt wird, das die Etage (L1, L2, L3) mit dem erhöhten Geräuschpegel angibt, und
Veranlassen, durch die Aufzugssteuerung (12), dass sich die Aufzugskabine (10) mit dem erhöhten Geräuschpegel als Reaktion auf das Steuersignal zu der Etage (L1, L2, L3) bewegt, **dadurch gekennzeichnet, dass** das Analysieren eines elektrischen Signals Folgendes beinhaltet:
- Analysieren einer Frequenzverschiebung, die durch den DopplerEffekt veranlasst wird, um zu bestimmen, ob sich eine Geräuschquelle der jeweiligen Sensoreinheit (4) nähert, oder
- Bestimmen einer Folge von Sensoreinheiten (4), die nacheinander erhöhte Geräuschpegel auf einer Etage (L1, L2, L3) erfassen, um eine Bewegungsrichtung der Geräuschquelle zu bestimmen.

10. Verfahren nach Anspruch 9, wobei das Bestimmen, ob eines der elektrischen Signale einen erhöhten Geräuschpegel angibt, für jedes elektrische Signal ein Vergleichen des Geräuschpegels, der durch das elektrische Signal dargestellt wird, mit einem Schwellenwert beinhaltet, wobei ein Überschreiten des Schwellenwerts einen erhöhten Geräuschpegel der jeweiligen Etage (L1, L2, L3) angibt.

11. Verfahren nach Anspruch 10, wobei der Schwellenwert einen Grundgeräuschpegel darstellt, der auf einer Etage (L1, L2, L3) vorherrscht.

12. Verfahren nach Anspruch 11, wobei der Grundgeräuschpegel eine Zeitfunktion ist.

13. Verfahren nach Anspruch 10, wobei der Schwellenwert einen durchschnittlichen Geräuschpegel darstellt, der von sprechenden Personen veranlasst wird.

14. Verfahren nach einem der Ansprüche 10-13, wobei das Bestimmen, ob eines der elektrischen Signale einen erhöhten Geräuschpegel angibt, für jedes elektrische Signal das Vergleichen des Geräuschpegels, der durch das elektrische Signal dargestellt wird, mit einem weiteren Schwellenwert beinhaltet, wobei der weitere Schwellenwert höher als der Schwellenwert ist, wobei die Aufzugsanlage (1) mehr als eine Aufzugskabine (10) beinhaltet, wobei das Überschreiten des weiteren Schwellenwerts einen erhöhten Geräuschpegel der jeweiligen Etage (L1, L2, L3) angibt, und wobei als Reaktion auf einen überschrittenen weiteren Schwellenwert zwei Aufzugskabinen (10) veranlasst werden, sich mit dem erhöhten Geräuschpegel zuder Etage (L1, L2, L3) zu bewegen.

15. Verfahren nach einem der Ansprüche 9-14, wobei das Steuersignal für die Aufzugssteuerung (12) erzeugt wird, wenn ein zuvor bestimmter Zeitraum abläuft.

16. Verfahren nach einem der Ansprüche 9-15, wobei das Analysieren der elektrischen Signale ein Ausführen eines Algorithmus für maschinelles Lernen beinhaltet, um die elektrischen Signale zu analysieren, um für die Etagen L1, L2, und/oder L3 ein Geräuschmuster über einen festgelegten Zeitraum zu bestimmen.

## Revendications

1. Installation d'ascenseur (1) destinée à un bâtiment (2), comprenant :
un dispositif de commande d'ascenseur (12) pour commander une cabine d'ascenseur (10) afin qu'elle se déplace d'un étage à un autre étage (L1, L2, L3) du bâtiment (2) ;
une pluralité d'unités de capteurs (4), chaque unité de capteur (4) étant située sur un étage (L1, L2, L3) et étant configurée pour générer un signal électrique qui indique un niveau de bruit à proximité de celui-ci sur l'étage (L1, L2, L3) ; et
une unité de traitement (6) couplée au dispositif de commande d'ascenseur (12) et aux unités de capteurs (4),
dans laquelle l'unité de traitement (6) est configurée pour analyser des signaux électriques reçus afin de déterminer si un signal électrique indique un niveau de bruit accru sur un étage (L1, L2, L3) sur lequel se trouve l'unité de capteur (4) générant ce signal électrique, et afin de générer un signal de commande pour le dispositif de commande d'ascenseur (12) qui indique l'étage (L1, L2, L3) ayant le niveau de bruit accru, et
dans laquelle le dispositif de commande d'ascenseur (12) en réponse au signal de commande provoque le déplacement de la cabine d'ascenseur (10) vers l'étage (L1, L2, L3) ayant le niveau de bruit accru, **caractérisé en ce que** l'analyse d'un signal électrique comporte :
- l'analyse d'un glissement de fréquence provoqué par l'effet Doppler pour déterminer si une source de bruit s'approche de l'unité de capteur respective (4), ou
- le fait de déterminer une séquence d'unités de capteurs (4) qui détectent séquentiellement des niveaux de bruit accrus sur un étage (L1, L2, L3) afin de déterminer une direction de déplacement de la source de bruit.

2. Installation (1) selon la revendication l,dans laquelle chaque unité de capteur (4) comporte un transducteur électroacoustique, le transducteur électroacoustique convertissant des variations de pression d'air provoquées par du bruit ou des voix en signal électrique.

3. Installation (1) selon l'une quelconque des revendications précédentes, dans laquelle chaque unité de capteur (4) comporte un module de radiofréquences pour transmettre le signal électrique.

4. Installation (1) selon la revendication 3, comprenant en outre une pluralité d'émetteurs-récepteurs de radiofréquences (20) couplés à l'unité de traitement (6), dans laquelle chaque émetteur-récepteur de radiofréquences est configuré pour recevoir le signal électrique transmis par l'émetteur de radiofréquences de l'unité de capteur qui est situé à l'intérieur de la plage de radiofréquences.

5. Installation (1) selon l'une quelconque des revendications let 2, comprenant en outre un réseau de communication comprenant des lignes de communication (28), dans laquelle chaque unité de capteur (4) est couplée à l'unité de traitement (6) par l'intermédiaire d'au moins l'une des lignes de communication (28).

6. Installation (1) selon l'une quelconque des revendications précédentes, comprenant en outre une base de données (8) couplée à l'unité de traitement (6), dans laquelle la base de données (8) stocke des données relatives aux événements de bâtiment.

7. Installation (1) selon l'une quelconque des revendications précédentes, dans laquelle l'unité de traitement (6) comporte un processeur de programmation (42), un processeur de son (44), un processeur de données (48) et un dispositif de mémoire (46), le processeur de programmation (42) étant couplé au processeur de son (44), au processeur de données (48) et au dispositif de mémoire (46), qui est en outre couplé au processeur de son (44) et au processeur de données (48).

8. Installation (1) selon l'une quelconque des revendications précédentes, dans laquelle l'unité de traitement (6) est configurée pour exécuter un algorithme d'apprentissage automatique pour analyser les signaux électriques afin de déterminer pour au moins l'un des étages L1, L2, L3 une courbe de bruit sur une période de temps définie.

9. Procédé de commande d'une installation d'ascenseur (1) dans un bâtiment présentant une pluralité d'étages (L1, L2, L3), dans lequel l'installation d'ascenseur (1) comporte un dispositif de commande d'ascenseur (12) qui provoque le déplacement d'une cabine d'ascenseur (10) d'un étage (L1, L2, L3) à un autre étage (L1, L2, L3), une pluralité d'unités de capteurs (4) situées sur les étages (L1, L2, L3) et une unité de traitement (6) couplée au dispositif de commande d'ascenseur (12) et aux unités de capteurs (4), le procédé comprenant :
la réception, par l'unité de traitement (6), de signaux électriques des unités de capteurs (4), chaque signal électrique indiquant un niveau de bruit sur un étage (L1, L2, L3) à proximité de l'unité de capteur (4) qui génère le signal électrique ;
l'analyse, par l'unité de traitement (6), des signaux électriques afin de déterminer si l'un des signaux électriques indique un niveau de bruit accru sur l'étage (L1, L2, L3) sur lequel se trouve l'unité de capteur (4) générant ce signal électrique, et, si un tel signal électrique est déterminé, la génération d'un signal de commande pour le dispositif de commande d'ascenseur (12) qui indique l'étage (L1, L2, L3) ayant le niveau de bruit accru, et
le fait de provoquer le déplacement, par le dispositif de commande d'ascenseur (12), de la cabine d'ascenseur (10) vers l'étage (L1, L2, L3) ayant le niveau de bruit accru en réponse au signal de commande, **caractérisé en ce que** l'analyse d'un signal électrique comporte :
- l'analyse d'un glissement de fréquence provoqué par l'effet Doppler pour déterminer si une source de bruit s'approche de l'unité de capteur respective (4), ou
- le fait de déterminer une séquence d'unités de capteurs (4) qui détectent séquentiellement des niveaux de bruit accrus sur un étage (L1, L2, L3) afin de déterminer une direction de déplacement de la source de bruit.

10. Procédé selon la revendication 9, dans lequel le fait de déterminer si l'un des signaux électriques indique un niveau de bruit accru comporte pour chaque signal électrique la comparaison du niveau de bruit représenté par le signal électrique à une valeur de seuil, le dépassement de la valeur de seuil indiquant un niveau de bruit accru de l'étage respectif (L1, L2, L3).

11. Procédé selon la revendication 10, dans lequel la valeur de seuil représente un niveau de bruit de base répandu sur un étage (L1, L2, L3).

12. Procédé selon la revendication 11, dans lequel le niveau de bruit de base est une fonction de temps.

13. Procédé selon la revendication 10, dans lequel la valeur de seuil représente un niveau de bruit moyen provoqué par des personnes qui parlent.

14. Procédé selon l'une quelconque des revendications 10 à 13, dans lequel le fait de déterminer si l'un des signaux électriques indique un niveau de bruit accru comporte pour chaque signal électrique la comparaison du niveau de bruit représenté par le signal électrique à une valeur de seuil supplémentaire, dans lequel la valeur de seuil supplémentaire est supérieure à la valeur de seuil, dans lequel l'installation d'ascenseur (1) comporte plus d'une cabine d'ascenseur (10), dans lequel le dépassement de la valeur de seuil supplémentaire indique un niveau de bruit accru de l'étage respectif (L1, L2, L3), et dans lequel en réponse au dépassement d'une valeur de seuil supplémentaire, un déplacement de deux cabines d'ascenseurs (10) est provoqué, à l'étage (L1, L2, L3) ayant le niveau de bruit accru.

15. Procédé selon l'une quelconque des revendications 9 à 14, dans lequel le signal de commande pour le dispositif de commande d'ascenseur (12) est généré lorsqu'une période de temps prédéterminée expire.

16. Procédé selon l'une quelconque des revendications 9 à 1515, dans lequel l'analyse des signaux électriques comporte l'exécution d'un algorithme d'apprentissage automatique pour analyser les signaux électriques afin de déterminer pour au moins l'un des étages L1, L2, L3 une courbe de bruit sur une période de temps définie.
